# EUROPEAN PATENT SPECIFICATION

(11) **EP 3 537 031 B1**
(45) Date of publication and mention of the grant of the patent: **16.04.2025**
(21) Application number: 17868092.2
(22) Date of filing: 02.11.2017
(51) Int. Cl.: F21S 41/00, F21S 43/00, F21S 45/00, F21V 14/04, F21V 19/02, F21W 103/00, F21W 104/00, F21W 105/00, F16C 11/06, F21W 102/00, B60Q 1/068

(54) **PIVOT, BEARING MECHANISM, AND VEHICLE HEADLAMP**
DREHGELENK, LAGERMECHANISMUS UND FAHRZEUGSCHEINWERFER
PIVOT, MÉCANISME DE PALIER ET PHARE DE VÉHICULE

(30) Priority: 02.11.2016 JP 2016215541
(43) Date of publication of application: 11.09.2019
(73) Proprietor: Ichikoh Industries, Ltd., Isehara-shi, Kanagawa 259-1192 (JP)
(72) Inventor: KAIEDA, Yuji, Isehara-shi Kanagawa 259-1192 (JP)
(74) Representative: Reddie & Grose LLP
(86) International application number: PCT/JP2017/039832
(87) International publication number: WO 2018/084270

(56) References cited:
- WO-A1-2004/067319
- WO-A1-2012/165388
- DE-A1- 10 112 310
- JP-A- 2003 197 009
- JP-A- 2003 242 871
- JP-A- 2005 056 651
- JP-U- S56 110 502
- US-A1- 2003 117 810

## Description

### TECHNICAL FIELD

The present invention relates to a pivot for holding a shaft member, a bearing mechanism, and a vehicle headlamp.

### BACKGROUND ART

Usually, a vehicle headlamp is provided with an optical axis adjustment mechanism in order to adjust an optical axis of a light source. There is known an optical axis adjustment mechanism configured to include an aiming screw (adjustment shaft), a nut member (pivot) with which a screw unit of the adjustment shaft is screwed, and a bearing member (case) that bears a main body (sphere unit) having a spherical outer peripheral surface of the pivot (see Japanese Unexamined Patent Application Publication No. 2007-055600). The pivot is also provided with a sliding guide unit in order to absorb a vibrational load and the like of a vehicle. The pivot and the case are made of plastic resin and formed by injection molding.

However, in the structure of the pivot described in FIG. 12 of JP. 2007-055600, upper and lower portions of the sphere unit cannot be borne by the case, so an area of a receiving surface of the case cannot be expanded. Therefore, an allowable load of the case cannot be increased, and the case may be broken. On the other hand, in the structure of the pivot described in FIG. 23 of JP. 2007-055600, upper and lower portions of the sphere unit can be borne by the case, but the sliding guide unit is coupled by a leg unit offset from a center of the sphere unit and a moment acts between the sphere unit and the sliding guide unit. As a result, breakage may occur between the sphere unit and the leg unit. US2003/117810 shows a related pivot.
WO2004/067319 discloses a regulation element for use in various vehicles. The regulation element is intended for adjusting the position of a light module with respect to position of the casing, and consists of a regulating screw, which is connected to the casing as well as of a nut, which may be set on the light module rim by means of bearing shoulders.

In view of the above problems, we have appreciated that it would be desirable to provide a compact pivot, a bearing mechanism, and a vehicle headlamp, by which it is possible to efficiently transmit a load acting on the pivot to a case that bears the pivot.

### SUMMARY OF THE INVENTION

(1) One aspect according to the present invention is a pivot including a sphere unit formed such that a through hole capable of holding a shaft member passes through a center of the sphere unit, and a sliding guide unit arranged to be suspended or mounted on a guide unit of a lamp housing, wherein the sphere unit has two leg units that connect the sphere unit to the sliding guide unit, the two legs units are formed so as to overlap a plane (L) that is orthogonal to an axial direction of the through hole and passes through the center, and to extend respectively from the left and right side surfaces of the sphere unit to the sliding guide unit as viewed from the front, so as to form as a space (S) an area surrounded by the sphere unit, the sliding guide unit, and the two leg units, the sliding guide unit including a tabular plate, and an elastic piece, wherein the two leg units are coupled to one surface of the plate, and the elastic piece is coupled to the other surface of the plate, a surface of the sphere unit surrounding the space (S) is a received surface to be borne in a vertical direction when mounted on the guide unit of the lamp housing when installed in a vehicle headlamp viewed from a front side on a lens side.
(2) In the aspect of (1), a reinforcement unit may be integrally formed between the two leg units and a top surface of the sliding guide unit.
(3) In the aspect of any one of (1) to (2), the elastic piece may have at least two convex units projecting toward a side opposite to the sphere unit.
(4) Another aspect according to the present invention is a bearing mechanism including a pivot and a case that bears the pivot, wherein the pivot is the pivot according to the aspect of any one of (1) to (3), the case is formed of two half-split structures each having a receiving surface for bearing the sphere unit, and the two half-split structures are locked together by at least three locking means.
(5) Further another aspect according to the present invention is a vehicle headlamp including a lamp housing on which a lens is mounted, a holding member that holds a light source, an optical axis adjustment mechanism that adjusts an optical axis, wherein the optical axis adjustment mechanism includes a shaft member as an adjustment shaft, the pivot according to the aspect of any one of (1) to (3), and a case that bears the pivot, the pivot holds the shaft member in the through hole by a screw structure including a male screw unit and a female screw unit, the case has an attached unit, the lamp housing has a guide unit to suspend or mount the sliding guide unit, and the holding member has an attachment unit to which the attached unit of the case is attached.

According to the present invention, it is possible to provide a compact pivot, a bearing mechanism, and a vehicle headlamp, by which it is possible to efficiently transmit a load acting on the pivot to a case that bears the pivot.

### BRIEF DESCRIPTION OF THE DRAWINGS

FIG. 1 is an exploded perspective view illustrating a vehicle headlamp provided with a pivot according to an embodiment of the present invention.
FIG. 2 is a rear perspective view illustrating the pivot according to the embodiment of the present invention.
FIGS. 3(a) and 3(b) illustrate the pivot according to the embodiment of the present invention, where FIG. 3(a) is a front view and FIG. 3(b) is a side view.
FIG. 4 is a rear perspective view illustrating a case.
FIGS. 5(a), 5(b), and 5(c) illustrate a developed state of the case, where FIG. 5(a) is a plan view, FIG. 5(b) is a front view, and FIG. 5(c) is a side view.
FIG. 6 is a schematic view illustrating a method of assembling a bearing mechanism.
FIG. 7(a) is a side cross sectional view illustrating a mounting state of an optical axis adjustment mechanism and FIG. 7(b) is a rear view of the same viewed from a rear side.
FIG. 8 is a front view illustrating a pivot having an elastic piece according to a modification.

### EXAMPLE EMBODIMENTS

With reference to the drawings, an embodiment of the present invention will be described in detail, below. It is noted that the same members are denoted by the same reference symbols throughout the embodiment herein. In addition, front and rear, left and right, and up and down indicate a direction when a vehicle headlamp is viewed from a front side on a lens side.

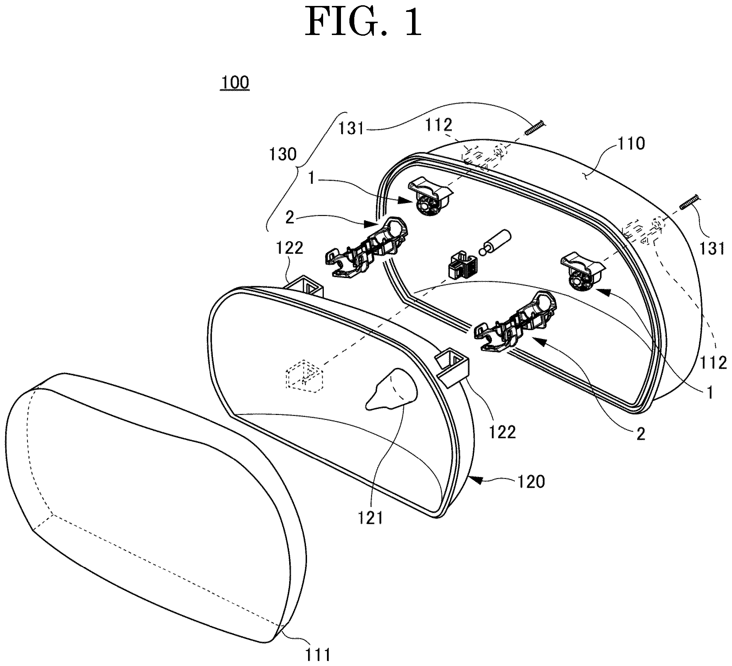

First, before a pivot 1 according to the embodiment of the present invention is described, a vehicle headlamp 100 will be described. FIG. 1 is a perspective view illustrating a vehicle headlamp provided with a pivot according to the embodiment of the present invention.

The headlamp 100 illustrated in FIG. 1 is designed so that an optical axis of a light source 121 is adjusted when a reflector 120 provided inside a lamp housing 110 swings, and includes the lamp housing 110, the reflector 120, and an optical axis adjustment mechanism 130.

The lamp housing 110 is in a box shape with its front side being open, and is made of a plastic resin. In the lamp housing 110, a lens (outer lens) 111 is mounted to the front opening.

Further, the lamp housing 110 has a guide unit 112 to suspend the optical axis adjustment mechanism 130. The guide unit 112 includes a pair of left and right projection pieces projecting, in an L shape, inward from a ceiling surface of a peripheral wall of the lamp housing 110, as viewed from the front side, where each of the guide units 112 is formed in a dovetail groove shape. However, the guide unit 112 may be formed on a bottom surface or on a side to mount the optical axis adjustment mechanism 130.

The lens 111 transmits direct light or reflected light from the light source 121.

Next, the reflector 120 functions as a holding member to which the light source 121 is attached at a rear center thereof, and is formed of a curved surface to reflect light from the light source 121 forward. Therefore, the reflector 120 is made of a plastic resin, and the inside thereof is a reflective surface on which silver plating or silver deposition is performed.

Further, the reflector 120 has an attachment unit 122 that attaches the optical axis adjustment mechanism 130. The attachment unit 122 is in a bracket shape extending rearward from the reflector 120, and has a rectangular opening at its distal end.

A discharge lamp such as a metal halide lamp or an LED element is employed for the light source 121.

Here, the optical axis adjustment mechanism 130 will be described.

The optical axis adjustment mechanism 130 adjusts the optical axis of the light source 121, and includes two optical axis adjustment mechanisms 130, that is, those at an upper left and an upper right on a rear side of the reflector 120, when the headlamp 100 is viewed from the front side (see FIG. 1). One end side on the front side of the optical axis adjustment mechanism 130 is attached to the reflector 120 and the other end side on the rear side thereof is attached to the lamp housing 110. It is noted that a swinging fulcrum for adjusting the optical axis is provided at a lower left on the rear side of the reflector 120.

The optical axis adjustment mechanism 130 is configured to include a shaft member 131 as an adjustment shaft, the pivot 1 that holds the shaft member 131, and a case 2 that bears the pivot 1.

### (Shaft member)

The shaft member 131 is a substantially round rod-like member, and is made of a plastic resin. On a front side of the shaft member 131, a male screw unit 132 is formed on an outer periphery of the shaft member 131. On the other hand, on a rear side of the shaft member 131, an unillustrated operated unit is formed to allow an operator to rotate the shaft member 131 by using a tool or the like, and the shaft member 131 is rotatably supported so that the operated unit is exposed to the outside of the lamp housing 110.

### (Pivot)

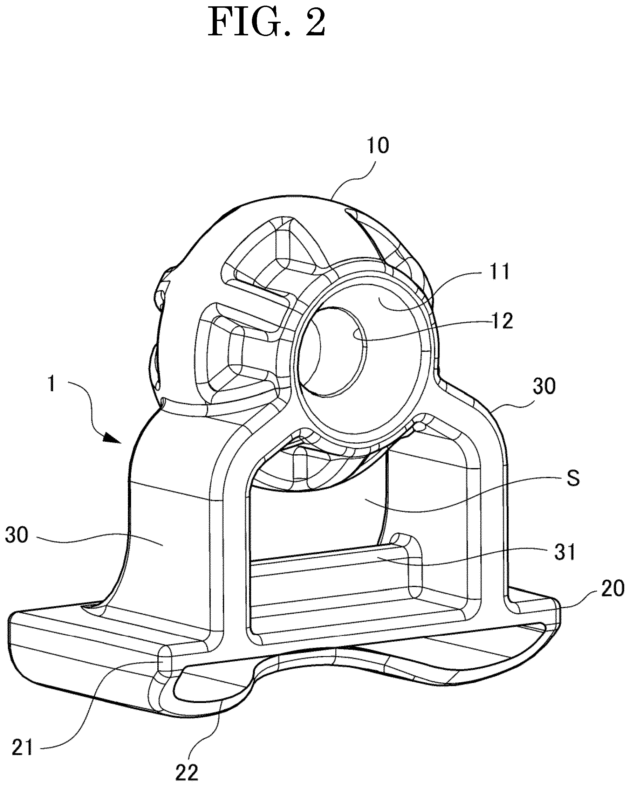

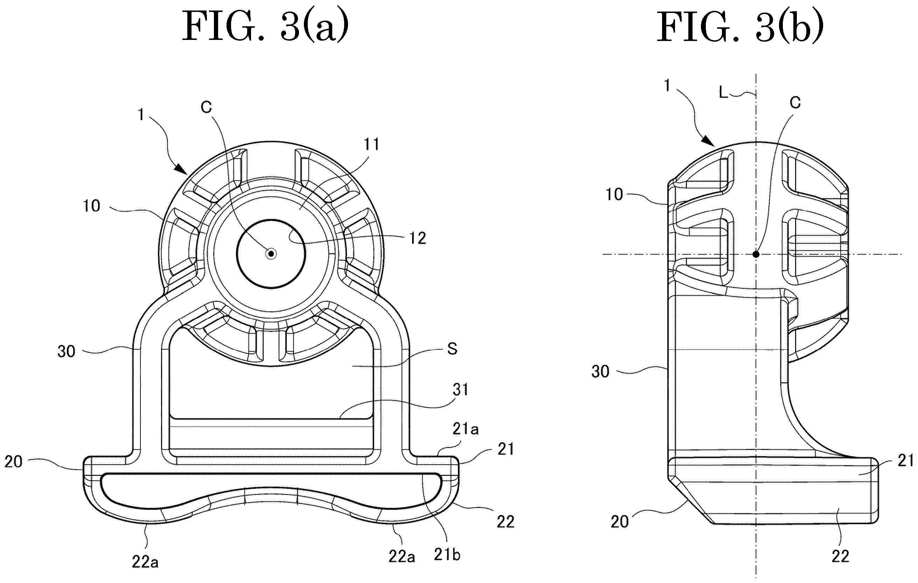

FIG. 2 is a rear perspective illustrating a pivot according to the embodiment of the present invention, and FIGS. 3(a) and 3(b) illustrate the pivot according to the embodiment of the present invention, where FIG. 3(a) is a front view and FIG. 3(b) is a side view. In addition, in FIG. 3(b), a right direction is a front direction of the vehicle.

The pivot 1 includes a sphere unit 10 that holds the shaft member 131 and a sliding guide unit 20 to be suspended or mounted on the guide unit 112 formed in the lamp housing 110, and is made of a plastic resin (see FIG. 2).

An outer periphery of the sphere unit 10 is generally spherical, a through hole 11 to pass through a center C is formed inside the sphere unit 10, and both sides in an axial direction of the through hole 11 are chamfered. Moreover, on an inner periphery of the through hole 11, a female screw unit 12 with which the male screw unit 132 of the shaft member 131 is screwed is formed (see FIG. 3(a)). If the male screw unit 132 of the shaft member 131 is screwed into the female screw unit 12 of the through hole 11 and held in the sphere unit 10, when the shaft member 131 is rotated, a screw structure including the male screw unit 132 and the female screw unit 12 allows the pivot 1 to move relatively back and forth.

Further, the sphere unit 10 is coupled to the sliding guide unit 20 via the two leg units 30. An outer surface of the sphere unit 10 other than a region where the two leg units 30 are coupled is finished to be a smooth surface to serve as a received surface borne by a below-described case 2.

Next, the sliding guide unit 20 includes a tabular plate 21 and an elastic piece 22. The plate 21 is designed so that the two leg units 30 are coupled to a top surface 21a being one surface, and the elastic piece 22 is coupled to a bottom surface 21b being the other surface.

Further, the end surface of the plate 21 at one (left) side of in the axial direction of the through hole 11 is substantially flush with the chamfered outer edge of the sphere unit 10, and the end surface of the plate 21 at the other (right) side thereof extends to a position offset outside of the chamfered outer edge of the sphere unit 10. Moreover, a region outside the two leg units 30 of the top surface 21a is finished to be a smooth surface to facilitate sliding when suspended or mounted on the guide unit 112 of the lamp housing 110.

The elastic piece 22 includes at least two convex units 22a projecting toward the side opposite to the sphere unit 10. The elastic pieces 22 have the same width (length in a front-rear direction) as those of left and right sides of the plate 21, extend toward the side opposite to the sphere unit 10, and have its center narrowed in the front-rear direction. The convex units 22a are located on both sides across a center portion of the elastic piece 22. Further, a surface of each of the convex unit 22a opposite to the sphere unit 10 is finished to be a smooth surface to facilitate sliding when suspended or mounted to the guide unit 112.

The two leg units 30 are coupled to the above-described sphere unit 10 and sliding guide unit 20. The two leg units 30 extend from the left and right of the sphere unit 10 toward the sliding guide unit 20, as viewed from the front, and an area surrounded by the sphere unit 10, the sliding guide unit 20, and the two leg units 30 forms a space S (see FIG. 2 and FIG. 3A).

Further, the two leg units 30 are formed to overlap a plane L that is orthogonal to the axial direction of the through hole 11 of the sphere unit 10 and passes through the center C (see FIG. 3B). The end surface of each of the leg units 30 at one (left) side in the axial direction of the through hole 11 is substantially flush with the chamfered outer edge of the sphere unit 10, and the end surface of each of the leg units 30 at the other (right) side thereof is further curved toward the other side toward the sliding guide unit 20 from a position offset outward of the plane L. When the two leg units 30 are overlapped on such a plane L, the pivot 1 can be formed with a simple mold even in a case of the pivot 1 including the sphere unit 10 because a mold can be manufactured with no undercut by using the plane L as a parting surface. It is noted that a reinforcement unit 31 is integrally formed between the two leg units 30 and the top surface 21a of the plate 21.

### (Case)

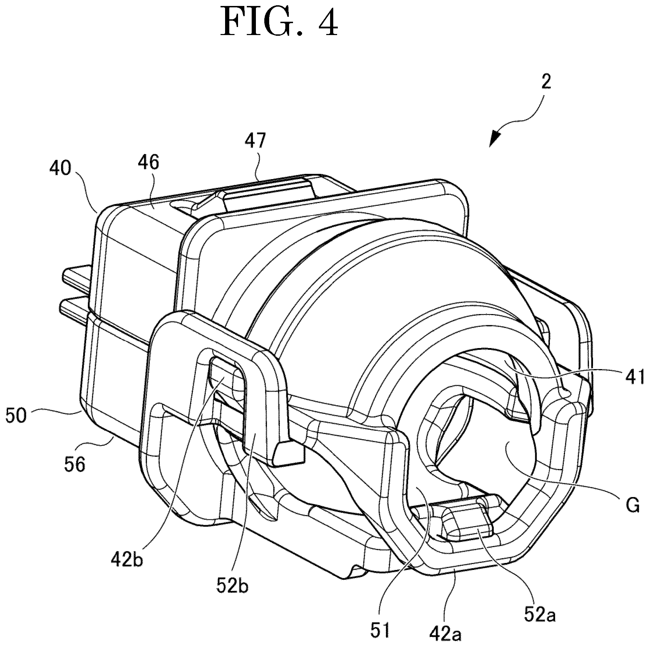

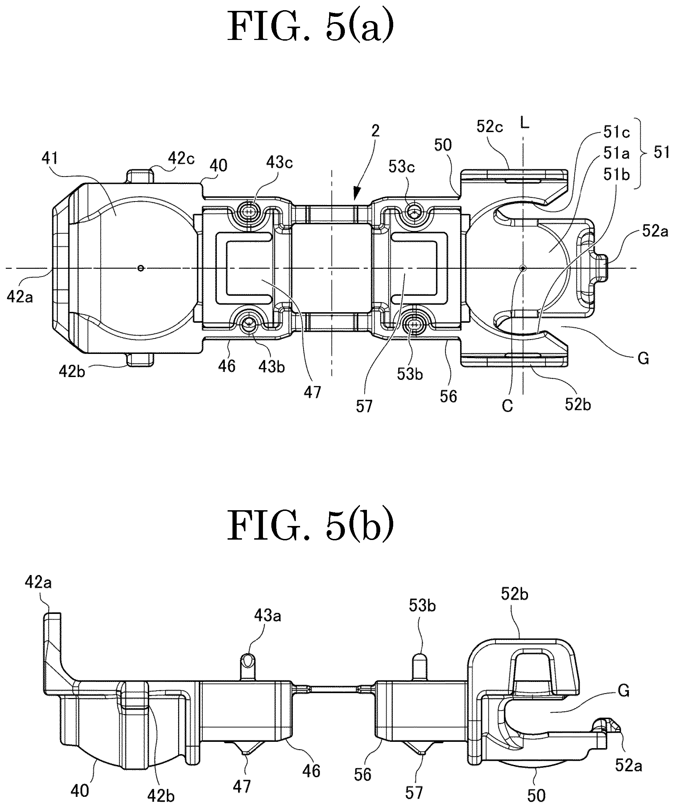

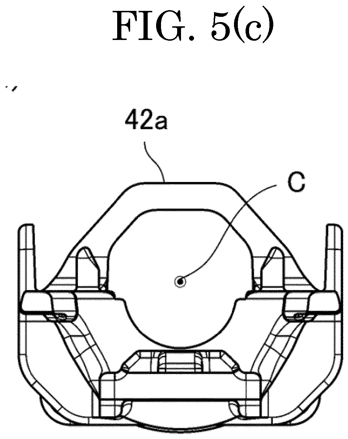

FIG. 4 is a rear perspective view illustrating a case, and FIGS. 5(a), 5(b), and 5(c) illustrate a developed state of the case, where FIG. 5(a) is a plan view, FIG. 5(b) is a front view, and FIG. 5(c) is a side view.

The case 2 bears an outer surface of the sphere unit 10 of the pivot 1 with receiving surfaces 41 and 51, and is formed of two half-split structures 40 and 50 (see FIG. 4). The two half-split structures 40 and 50 are made of a plastic resin, and are further formed into an integrally molded article coupled to each other. In the case 2, attached units 46 and 56 to be attached to the attachment unit 122 of the reflector 120 are formed on the front side and the receiving surfaces 41 and 51 are formed on the rear side.

The two half-split structures 40 and 50 are locked together with at least three locking means 42 and 52 when assembled to bear the sphere unit 10. It is noted that the two half-split structures 40 and 50 of the present embodiment may be formed separately, and in this case, the number of the locking means 42 and 52 is not limited to three.

First, the half-split structure 40 bears an upper side of the sphere unit 10 opposite to the sliding guide unit 20 with the substantially hemispherical receiving surface 41 (see FIG. 5). The receiving surface 41 is finished to be a smooth surface to facilitate sliding when bearing the sphere unit 10.

The locking means 42a of the half-split structure 40 has an opening and is formed on an end side being a front side when assembled to the half-split structure 50 while the locking means 42b and 42c have protrusions and are formed on the left and right.

Further, a positioning means 43b is a cylindrical shape with a distal end thereof cut, and a positioning means 43c is a circular hole, each of which is formed on either left or right of the attached unit 46.

Next, the half-split structure 50 bears a lower side of the sphere unit 10 on the side of the sliding guide unit 20 by the substantially hemispherical receiving surface 51 (see FIG. 5). However, the lower side of the sphere unit 10 is coupled to the two leg units 30, and thus, the receiving surface 51 is divided into three regions, that is, a receiving surface 51a for bearing a lower portion of the sphere unit 10, a receiving surface 51b and a receiving surface 51c for bearing left and right portions of the sphere unit 10. The receiving surface 51a is formed in a size to be inserted into the space S of the pivot 1. Further, a gap G is each formed between the receiving surface 51a and the receiving surface 51b and between the receiving surface 51a and the receiving surface 51c so that the leg unit 30 can be inserted. The receiving surface 51 is finished to be a smooth surface to facilitate sliding when bearing the sphere unit 10.

The locking means 52a formed on the receiving surface 51a of the half-split structure 50 includes a projection, while the locking means 52b and 52c respectively formed on the receiving surfaces 51b and 51c include an opening, where the locking means 52a, 52b, and 52c are formed at positions corresponding to the locking means 42a, 42b, and 42c of the half-split structure 40. Further, a positioning means 53b is a circular hole, and a positioning means 53c is in a cylindrical shape with a distal end thereof cut, each of which is formed at a position corresponding to each of the positioning means 43b and 43c of the half-split structure 40.

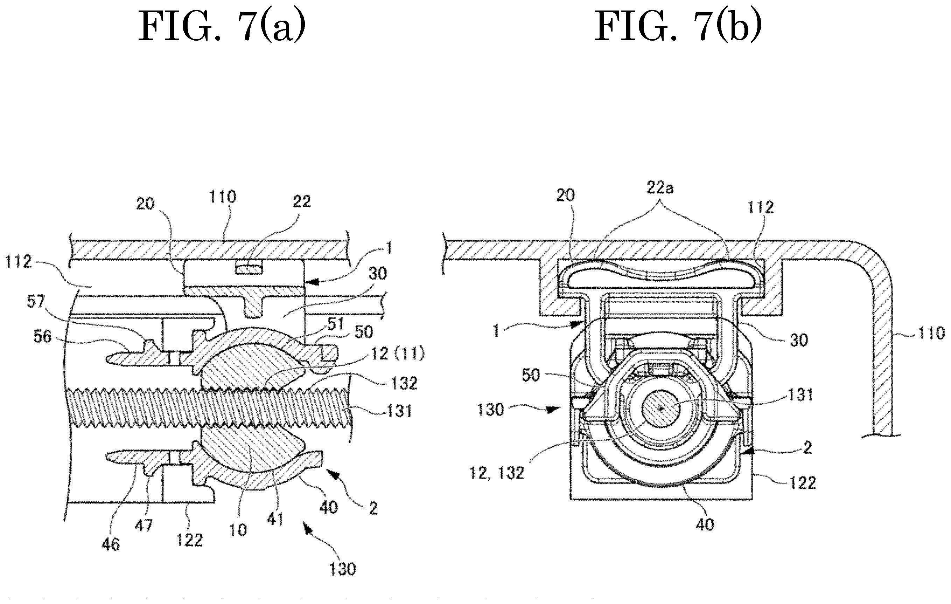

The attached units 46 and 56 are hollow square pillars in an assembled state, and have locking claws 47 and 57, respectively. When the attached units 46 and 56 are inserted into the rectangular openings of the attachment unit 122 of the reflector 120, the locking claws 47 and 57 are locked in the openings and attached to the reflector 120 (see FIG. 7).

### (Assembling method of bearing mechanism)

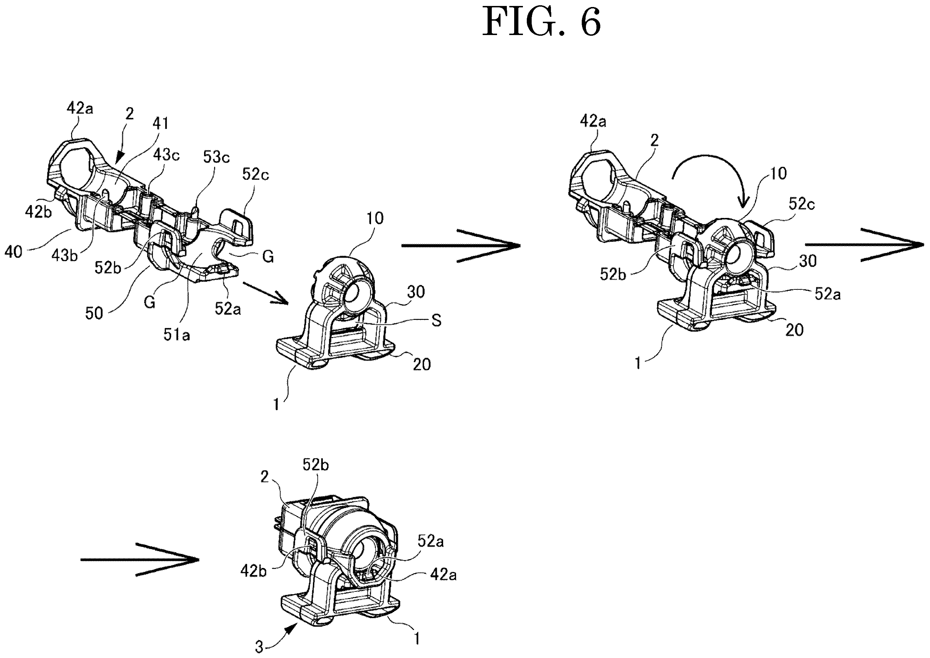

A method of assembling a bearing mechanism 3 that bears the pivot 1 by the case 2 will be described. FIG. 6 is a schematic view illustrating the method of assembling the bearing mechanism.

First, the case 2 in a developed state is set while placing the half-split structure 50 at the head, and the receiving surface 51a of the half-split structure 50 is inserted into the space S of the pivot 1 and the two leg units 30 are inserted into the gap G.

Next, the half-split structures 40 is bent toward the half-split structure 50, the pillar of the positioning means 43b is inserted into the circular hole of the positioning means 53b, and the pillar of the positioning means 53c is inserted into the circular hole of the positioning means 43c. Further, protrusions of the locking means 42b and 42c are respectively inserted into openings of the locking means 52b and 52c, and a projection of the locking means 52a is inserted into an opening of the locking means 42a.

Thus, the two half-split structures 40 and 50 of the case 2 are positioned relative to each other and the case 2 is locked to bear the pivot 1.

It is noted that a relationship between the projections and the openings of the locking means 42 and 52 and a relationship between the positioning means 43 and 53 are relative to each other, and therefore, these may be interchangeably formed on the opposite side, and may be another locking structure.

The shaft member 131 is attached, as an adjustment shaft, to the bearing mechanism 3 to configure the optical axis adjustment mechanism 130. In other words, when the male screw unit 132 of the shaft member 131 is screwed into the female screw unit 12 of the through hole 11 of the pivot 1, the shaft member 131 is attached to the bearing mechanism 3 to configure the optical axis adjustment mechanism 130.

Further, when the optical axis adjustment mechanism 130 is attached to the headlamp 100, the optical axis of the light source 121 can be adjusted.

FIG. 7(a) is a side cross sectional view illustrating a mounting state of the optical axis adjustment mechanism and FIG. 7(b) is a rear view of the same viewed from a rear side.

As illustrated in FIG. 7, the optical axis adjustment mechanism 130 is suspended from the guide unit 112 of the lamp housing 110 and attached to the attachment unit 122 of the reflector 120. Specifically, the sliding guide unit 20 of the pivot 1 is slidably locked into a dovetail groove of the guide unit 112, and the attached units 46 and 56 of the case 2 are inserted into a rectangular opening of the attachment unit 122 to be attached non-rotatably, and are prevented from removal by the locking claws 47 and 57.

Next, when an operator operates an operated unit with a tool to rotate clockwise the shaft member 131 of the optical axis adjustment mechanism 130 at an upper right of the headlamp 100 when viewed from the front, the male screw unit 132 formed on an outer periphery of the shaft member 131 is simultaneously rotated and the pivot 1 having the female screw unit 12 to be screwed into the male screw unit 132 moves axially rearward, and the reflector 120 swings obliquely upward to the right. Thus, each optical axis adjustment mechanism 130 swings the reflector 120 in the vertical and horizontal directions to adjust the optical axis of the light source 121.

As described above, the pivot 1 of the embodiment includes the sphere unit 10 formed such that the through hole 11 capable of holding the shaft member 131 passes through the center C of the sphere unit 10, and the sliding guide unit 20 to be suspended or mounted, where the sphere unit 10 is coupled to the sliding guide unit 20 via the two leg units 30. As a result, when the pivot 1 is suspended or mounted, the received surface of the sphere unit 10 can be formed also in a direction where a load is applied, that is, in a vertical direction, and thus, even the compact pivot 1 can efficiently transmit the load acting on the pivot 1 to the case 2 that bears the pivot 1.

In the embodiment, the two leg units 30 are formed to overlap the plane L running perpendicular to the axial direction of the through hole 11 and passing through the center C. As a result, also when the pivot 1 including the sphere unit 10, the sliding guide unit 20, and the leg units 30 is formed by injection molding, in a molding mold, there is no undercut between the sphere unit 10 of the pivot 1 and the sliding guide unit 20 thereof, and thus, no complicated structure is necessary, a cost of the mold can be reduced, and the number of molding steps can also be reduced.

In the embodiment, the sliding guide unit 20 includes the tabular plate 21, and the elastic piece 22, wherein the plate 21 is designed so that the two leg units 30 are coupled to the top surface 21a being one surface, and the elastic piece 22 is coupled to the bottom surface 21b being the other surface. As a result, when the pivot 1 is suspended or mounted, even if a load or an impact is applied, the elastic piece 22 can bend to absorb the load or the impact.

In the embodiment, the elastic piece 22 includes at least two convex units 22a projecting toward the side opposite to the sphere unit 10. As a result, when the pivot 1 is suspended or mounted, even if a load or an impact is applied, the load or the impact can be distributed, and thus, an allowable strength of the elastic piece 22 of the sliding guide unit 20 of the pivot 1 can be increased.

The bearing mechanism 3 of the embodiment includes the pivot 1 and the case 2 that bears the pivot 1, and the case 2 that bears the sphere unit 10 of the pivot 1 is formed of the two half-split structures 40 and 50 having the receiving surfaces 41 and 51 for bearing the sphere unit 10, and the two half-split structures 40 and 50 are locked together by at least three locking means 42 and 52. As a result, even if the pivot 1 has the received surfaces of the sphere unit 10 in the vertical direction and the case 2 is formed of the two half-split structures 40 and 50, when the pivot 1 is borne by the case 2, it is possible to prevent a case where the two half-split structures 40 and 50 of the case 2 are unlocked and developed.

The vehicle headlamp 100 according to the embodiment includes the lamp housing 110 on which the outer lens 111 is mounted, the reflector (holding member) 120 to which the light source 121 is attached, and the optical axis adjustment mechanism 130 that adjusts an optical axis, wherein the lamp housing 110 has the guide unit 112 to suspend or mount the sliding guide unit 20 of the pivot 1, the reflector 120 has the attachment unit 122 that attaches the case 2, the optical axis adjustment mechanisms 130 includes the shaft member 131 as an adjustment shaft, the pivot 1, the case 2 that bears the sphere unit 10 of the pivot 1, the pivot 1 holds the shaft member 131 in the through hole 11 by a screw structure, and the case 2 has the attached units 46 and 56 to be attached to the attachment unit 122. As a result, even if a vehicle vibrates up and down and the like, a load or an impact can be absorbed by the sliding guide unit 20, and therefore, the optical axis adjustment mechanism 130 is not broken and is durable for use with the headlamp 100.

### (Modification)

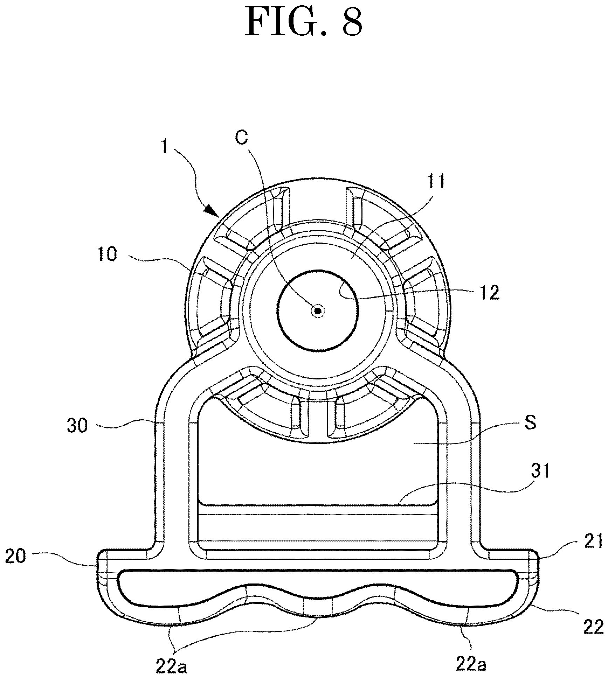

FIG. 8 is a front view illustrating a pivot having an elastic piece according to a modification.

In the above embodiment, the elastic piece 22 includes the two convex units 22a. However, as illustrated in FIG. 8, the elastic piece 22 may have three convex units 22a. If there are two convex units 22a of the elastic piece 22, when a load is applied to the convex units 22a, stress may be concentrated at a center because a center side is recessed. If the pivot 1 is formed by injection molding, a gate is formed near the sphere unit 10, and thus, at a portion of the elastic piece 22, a weld line formed when molten resin fronts meet is generated near the center, and as a result, a position where the stress concentrates and a position of the weld line substantially coincide, and a sufficient strength may not be secured.

However, the elastic piece 22 of the modification includes the three convex units 22a to form two concave units, and thus, the stress by the load applied to the convex units 22a disperses near the two concave units. Therefore, the allowable strength of the sliding guide unit 20 of the pivot 1 can be further enhanced, and even if the vehicle intensively vibrates up and down and the like, the load or the impact can be absorbed.

In the above embodiment, the swinging fulcrum for adjusting the optical axis is provided at the lower left of the headlamp 100; however, the swinging fulcrum may be provided at any position including a lower right or an upper right. Further, all of the swinging fulcrums may be used as the optical axis adjustment mechanism 130, and instead of the swinging fulcrum, an optical axis adjustment unit may be provided, the optical axis adjustment unit being configured to perform an automatic adjustment in accordance with a posture of a vehicle.

Further, in the above embodiment, the holding member 120 that holds the light source 121 is the reflector; however, the holding member 120 is not limited to the reflector, and may be held by a member such as a bracket or a heat sink for heat radiation.

In addition, the bearing mechanism 3 including the pivot 1 and the case 2 may be applied not only to a product such as the optical axis adjustment mechanism 130 described above but also to an articulating portion of various types of machines requiring a spherical sliding bearing.

Although the preferred embodiment of the present invention is described above in detail, the present invention is not limited to the above-described embodiment, and various modifications and changes may be made within the scope of the subject matter of the present invention defined in the claims.

### REFERENCE SIGNS LIST

- 1: Pivot
- 10: Sphere unit
- 11: Through hole
- 12: Female screw unit
- 20: Sliding guide unit
- 21: Plate
- 21a: Top surface
- 21b: Bottom surface
- 22: Elastic piece
- 22a: Convex unit
- 30: Leg unit
- 31: Reinforcement unit
- 2: Case
- 40: Half-split structure
- 41: Receiving surface
- 42, 42a, 42b, 42c: Locking means
- 43, 43b, 43c: Positioning means
- 46: Attached unit
- 47: Locking claw
- 50: Half-split structure
- 51, 51a, 51b, 51c: Receiving surface
- 52, 52a, 52b, 52c: Locking means
- 53, 53b, 53c: Positioning means
- 56: Attached unit
- 57: Locking claw
- 3: Bearing mechanism
- 100: Head lamp
- 110: Lamp housing
- 111: Lens
- 112: Guide unit
- 120: Reflector (holding member)
- 121: Light source
- 122: Attachment unit
- 130: Optical axis adjustment mechanism
- 131: Shaft member
- 132: Male screw unit
- C: Center
- L: Plane
- S: Space
- G: Gap

## Claims

1. A pivot (1), comprising:
a sphere unit (10) formed such that a through hole (11) capable of holding a shaft member (131) passes through a center of the sphere unit (10); and
a sliding guide unit (20) arranged to be suspended or mounted on a guide unit (112) of a lamp housing (110),
**characterized in that**:
the sphere unit (10) has two leg units (30) that connect the sphere unit (10) to the sliding guide unit (20),
the two legs (30) units are formed so as to overlap a plane (L) that is orthogonal to an axial direction of the through hole (11) and passes through the center, and to extend respectively from the left and right side surfaces of the sphere unit (10) to the sliding guide unit (20) as viewed from the front, so as to form as a space (S) an area surrounded by the sphere unit (10), the sliding guide unit (20), and the two leg units (30),
the sliding guide unit (20) includes a tabular plate (21) and an elastic piece (22), and the two leg units (30) are coupled to one surface of the plate (21) and the elastic piece (22) is coupled to the other surface of the plate; and
a surface of the sphere unit (10) surrounding the space (S) is a received surface to be borne in a vertical direction when mounted on the guide unit (112) of the lamp housing (110) when installed in a vehicle headlamp viewed from a front side on a lens side.

2. The pivot according to claim 1, wherein a reinforcement unit (31) is integrally formed between the two leg units (30) and a top surface (21a) of the sliding guide unit (20).

3. The pivot according to claim 1 or 2, wherein
the elastic piece (22) includes at least two convex units protruding toward a side opposite to the sphere unit.

4. A bearing mechanism (3), comprising: a pivot (1); and a case (2) that bears the pivot (1),
**characterized in that**
the pivot (1) is the pivot according to any of claims 1 to 3,
the case (2) is formed of two half-split structures (40, 50) each having a receiving surface (41, 51) for bearing the sphere unit (10), and
the two half-split structures (40, 50) are locked together by at least three locking means (42, 52).

5. A vehicle headlamp (100), comprising: a lamp housing (110) on which a lens (111) is mounted; a holding member (120) that holds a light source (121); and an optical axis adjustment mechanism (130) that adjusts an optical axis,
**characterized in that**
the optical axis adjustment mechanism (130) includes a shaft member as an adjustment shaft, the pivot (1) according to any of claims 1 to 3, and a case (2) that bears the pivot,
the pivot (1) holds the shaft member (131) in the through hole by a screw structure including a male screw unit (132) and a female screw unit,
the case (2) has an attached unit,
the lamp housing (110) has a guide unit (112) to suspend or mount the sliding guide unit (20), and
the holding member (120) has an attachment unit to which the attached unit of the case is attached.

## Patentansprüche

1. Drehgelenk (1), das Folgendes aufweist:
eine Kugeleinheit (10), die so gebildet ist, dass ein Durchgangsloch (11), das ein Spindelelement (131) aufnehmen kann, durch eine Mitte der Kugeleinheit (10) verläuft; und
eine Gleitführungseinheit (20), die angeordnet ist, um an einer Führungseinheit (112) eines Leuchtengehäuses (110) aufgehängt oder montiert zu sein,
**dadurch gekennzeichnet, dass**:
die Kugeleinheit (10) zwei Beineinheiten (30) hat, die die Kugeleinheit (10) mit der Gleitführungseinheit (20) verbinden,
die zwei Beineinheiten (30) so gebildet sind, dass sie eine Ebene (L) überlappen, die zu einer axialen Richtung des Durchgangslochs (11) orthogonal ist und durch die Mitte verläuft, und dass sie sich von der linken bzw. rechten Seitenfläche der Kugeleinheit (10) zur Gleitführungseinheit (20) erstrecken, von vorne gesehen, um einen von der Kugeleinheit (10), der Gleitführungseinheit (20) und den zwei Beineinheiten (30) umgebenen Bereich als einen Raum (S) zu bilden,
die Gleitführungseinheit (20) eine flache Platte (21) und ein elastisches Stück (22) beinhaltet und die zwei Beineinheiten (30) mit einer Oberfläche der Platte (21) gekoppelt sind und das elastische Stück (22) mit der anderen Oberfläche der Platte gekoppelt ist; und
eine Oberfläche der Kugeleinheit (10), die den Raum (S) umgibt, eine aufgenommene Oberfläche ist, die in einer vertikalen Richtung zu tragen ist, wenn sie an der Führungseinheit (112) des Lampengehäuses (110) montiert ist, wenn sie in einem Fahrzeugscheinwerfer installiert ist, von einer Vorderseite auf einer Linsenseite gesehen.

2. Drehgelenk nach Anspruch 1, wobei eine Verstärkungseinheit (31) zwischen den zwei Beineinheiten (30) und einer Oberseite (21a) der Gleitführungseinheit (20) einstückig gebildet ist.

3. Drehgelenk nach Anspruch 1 oder 2, wobei
das elastische Stück (22) mindestens zwei konvexe Einheiten beinhaltet, die zu einer der Kugeleinheit entgegengesetzten Seite hin vorstehen.

4. Lagermechanismus (3), der Folgendes aufweist: ein Drehgelenk (1); und ein Gehäuse (2), das das Drehgelenk (1) lagert,
**dadurch gekennzeichnet, dass**
das Drehgelenk (1) das Drehgelenk nach einem der Ansprüche 1 bis 3 ist,
das Gehäuse (2) aus zwei halbgeteilten Gebilden (40, 50) gebildet ist, die jeweils eine Aufnahmefläche (41, 51) zum Lagern der Kugeleinheit (10) haben, und
die zwei halbgeteilten Gebilde (40, 50) durch mindestens drei Verriegelungsmittel (42, 52) miteinander verriegelt sind.

5. Fahrzeugscheinwerfer (100), der Folgendes aufweist: ein Leuchtengehäuse (110), an dem eine Linse (111) montiert ist; ein Halteelement (120), das eine Lichtquelle (121) hält; und einen Optische-Achse-Einstellmechanismus (130), der eine optische Achse einstellt,
**dadurch gekennzeichnet, dass**
der Optische-Achse-Einstellmechanismus (130) ein Spindelelement als eine Einstellspindel, das Drehgelenk (1) nach einem der Ansprüche 1 bis 3 und ein Gehäuse (2), das das Drehgelenk trägt, beinhaltet,
das Drehgelenk (1) das Spindelelement (131) durch ein Schraubgebilde, das eine männliche Schraubeinheit (132) und eine weibliche Schraubeinheit beinhaltet, in dem Durchgangsloch hält,
das Gehäuse (2) eine angebrachte Einheit hat,
das Leuchtengehäuse (110) eine Führungseinheit (112) zum Aufhängen oder Montieren der Gleitführungseinheit (30) hat und
das Halteelement (120) eine Anbringungseinheit hat, an der die angebrachte Einheit des Gehäuses angebracht ist.

## Revendications

1. Pivot (1), comprenant
une unité de sphère (10) formée de manière telle qu'un trou traversant (11) capable de tenir un membre d'arbre (131) passe à travers un centre de l'unité de sphère (10) ; et
une unité de guidage coulissante (20) arrangée pour être suspendue ou montée sur une unité de guidage (112) d'un boîtier de lampe (110),
**caractérisé en ce que** :
l'unité de sphère (10) a deux unités de pied (30) qui raccordent l'unité de sphère (10) à l'unité de guidage coulissante (20),
les deux unités de pied (30) sont formées de manière à chevaucher un plan (L) qui est orthogonal à une direction axiale du trou traversant (11) et passe à travers le centre, et pour s'étendre respectivement des surfaces latérales gauche et droite de l'unité de sphère (10) jusqu'à l'unité de guidage coulissante (20) telles que vues de l'avant, de manière à former comme un espace (S) une zone entourée par l'unité de sphère (10), l'unité de guidage coulissante (20) et les deux unités de pied (30),
l'unité de guidage coulissante (20) comprend une plaque tabulaire (21) et une pièce élastique (22), et les deux unités de pied (30) sont couplées à une surface de la plaque (21) et la pièce élastique (22) est couplée à l'autre surface de la plaque ; et une surface de l'unité de sphère (10) entourant l'espace (S) est une surface reçue à soutenir dans une direction verticale lorsque montée sur l'unité de guidage (112) du boîtier de lampe (110) lorsque installée dans un phare de véhicule vu d'un côté avant sur un côté de lentille.

2. Pivot selon la revendication 1, dans lequel une unité de renforcement (31) est formée intégralement entre les deux unités de pied (30) et une surface supérieure (21a) de l'unité de guidage coulissante (20).

3. Pivot selon la revendication 1 ou 2, dans lequel
la pièce élastique (22) comprend au moins deux unités convexes faisant saillie vers un côté opposé à l'unité de sphère.

4. Mécanisme de palier (3), comprenant un pivot (1) ; et un carter (2) qui porte le pivot (1),
**caractérisé en ce que**
le pivot (1) est le pivot selon l'une quelconque des revendications 1 à 3,
le carter (2) est formé de deux structures divisées en deux (40, 50) ayant chacune une surface de réception (41, 51) pour soutenir l'unité de sphère (10) : et
les deux structures divisées en deux (40, 50) sont verrouillées ensemble par au moins trois moyens de verrouillage (42, 52).

5. Phare de véhicule (100), comprenant : un boîtier de lampe (110) sur lequel une lentille (111) est montée ; un membre de maintien (120) qui tient une source de lumière (121) ; et un mécanisme d'ajustement d'axe optique (130) qui ajuste un axe optique,
**caractérisé en ce que**
le mécanisme d'ajustement d'axe optique (130) comprend un membre d'arbre en tant qu'arbre d'ajustement, le pivot (1) selon l'une quelconque des revendications 1 à 3, et un carter (2) qui porte le pivot,
le pivot (1) tient le membre d'arbre (131) dans le trou traversant par une structure à vis comprenant une unité de vis mâle (132) et une unité de vis femelle,
le carter (2) a une unité attachée,
le boîtier de lampe (110) a une unité de guidage (112) pour suspendre ou monter l'unité de guidage coulissante (20), et
le membre de maintien (120) a une unité d'attache à laquelle l'unité attachée du carter est attachée.
